# FASCICULE DE BREVET EUROPEEN

(11) **EP 3 386 704 B1**
(45) Date de publication et mention de la délivrance du brevet: **05.02.2020**
(21) Numéro de dépôt: 16819618.6
(22) Date de dépôt: 08.12.2016
(51) Int. Cl.: B29C 33/26, B29D 30/06, B30B 11/00, B29C 33/48

(54) **PRESSE DE CUISSON D'UNE ÉBAUCHE DE PNEUMATIQUE COMPRENANT UNE BIELLETTE**
VULKANISIERUNGSPRESSE FÜR EINEN REIFENROHLING MIT EINER ZUGSTANGE
CURING PRESS FOR A TYRE BLANK, COMPRISING A TIE ROD

(30) Priorité: 10.12.2015 FR 1562154
(43) Date de publication de la demande: 17.10.2018
(73) Titulaire: Compagnie Générale des Etablissements Michelin, 63000 Clermont-Ferrand (FR)
(72) Inventeur: MASSOPTIER-DAVID, Michaël, 63040 Clermont-Ferrand Cedex 9 (FR); CHALAND, Stéphane, 63040 Clermont-Ferrand Cedex 9 (FR)
(74) Mandataire: Roussy, Delphine
(86) Numéro de dépôt international: PCT/FR2016/053267
(87) Numéro de publication internationale: WO 2017/098158

(56) Documents cités:
- EP-A1- 2 928 677
- EP-A2- 1 323 515
- WO-A1-2011/001095
- DE-A1- 2 422 406
- JP-A- 2006 312 251

## Description

L'invention concerne la fabrication de pneumatiques et en particulier les moules de cuisson de l'ébauche de pneumatique. Elle concerne en particulier les pneumatiques pour des engins de génie civil tels que ceux utilisés dans les mines.

On connait du document WO 2011/001095 aux noms des demanderesses un moule de cuisson d'une ébauche de pneumatique comprenant des coquilles supérieure et inférieure mobiles à coulissement en direction l'une de l'autre et servant à mouler les flancs de l'ébauche, ainsi que des secteurs latéraux mobiles en direction radiale à l'axe du moule et servant à mouler la bande de roulement. Lors de l'ouverture du moule, le coulissement vers le haut du plateau portant la coquille inférieure entraine le coulissement radial des secteurs par rapport à la coquille afin de libérer l'ébauche. À cette fin, à chaque secteur est associé un levier articulé au secteur, relié au bâti du moule et en appui sur une rampe du plateau formant une face orientée en direction de l'axe. Le mouvement de coulissement radial des secteurs facilite le démoulage des sculptures de la bande de roulement.

On connait également du document EP-2 928 677 une presse selon le préambule de la revendication 1.

La fabrication des pneumatiques d'engins de génie civil soulève des problèmes particuliers. En effet, ces pneumatiques sont de très grandes dimensions. De plus, dans les modèles récents, ils comprennent sur leur bande de roulement un grand nombre de rainures relativement fines et profondes qui peuvent avoir une forme complexe (par exemple ondulée, sous forme de crochet, etc.) qui rendent plus délicat le démoulage. Il faut donc disposer d'un mécanisme qui permette de faire reculer les secteurs sur une course plus importante au cours d'un mouvement de coulissement ou d'un mouvement qui soit proche d'un mouvement de coulissement.

Un but de l'invention est donc de faciliter le moulage et le démoulage de ce type de pneumatique.

À cet effet, on prévoit selon l'invention une presse de cuisson d'une ébauche de pneumatique, la presse comportant :
- un bâti,
- plusieurs secteurs répartis circonférentiellement aptes à former une bande de roulement du pneumatique, ces secteurs présentant chacun au moins une ouverture, et
- pour chaque secteur, au moins une biellette montée mobile à coulissement et à rotation dans l'ouverture du secteur d'une part et articulée au bâti d'autre part, ce montage et cette articulation formant les seules liaisons de la biellette avec d'autres éléments de la presse que la biellette.

Ainsi, grâce à la présence de ces biellettes articulées avec les secteurs et avec le bâti, ce nouveau type de mécanisme offre des possibilités inédites pour assurer le recul du secteur lors du démoulage. On peut en particulier donner à ce recul une plus grande amplitude avant que le secteur connaisse un basculement ou un basculement important. On peut donc notamment assurer le démoulage de bandes de roulement de pneumatiques de grandes dimensions présentant de nombreuses rainures fines telles que les sculptures des pneumatiques de génie civil.

Le fait que la biellette ne comprenne des liaisons qu'avec le bâti et le secteur permet de simplifier le dispositif et de réduire l'encombrement. Ces liaisons de la biellette avec le bâti et le secteur sont les deux seules, et ce quelle que soient les positions de fonctionnement de la presse. Autrement dit, au cours d'un cycle complet d'ouverture et de fermeture du moule, aucune autre liaison impliquant la biellette n'entre en jeu.

On peut notamment envisager une biellette de forme générale parallélépipédique dont les deux points de liaison se situeraient à chacune de ses extrémités longitudinales.

On peut prévoir que la biellette est articulée avec une structure particulière du bâti, par exemple une cale.

On peut prévoir que la presse est agencée de sorte que chaque biellette reste logée à une extrémité de l'ouverture du secteur correspondant pendant une plus grande partie d'un coulissement du secteur.

Cette disposition permet notamment d'empêcher le secteur de basculer sur une plus grande partie d'un coulissement de celui-ci et donc d'augmenter l'amplitude de ce coulissement.

On peut prévoir que la presse est agencée de sorte que chaque biellette coulisse dans l'ouverture du secteur correspondant lors d'un basculement du secteur.

C'est le parcours de l'ouverture par la biellette qui permet au secteur de basculer. Le basculement peut résulter d'un coulissement vers le haut d'un élément de la presse sur lequel le secteur est en appui.

Avantageusement, chaque secteur présente deux ouvertures en regard l'une de l'autre, la ou chaque biellette correspondante étant de préférence montée dans ces deux ouvertures.

Ainsi, la biellette peut, par exemple, présenter une extrémité qui soit montée mobile à rotation et à coulissement dans ces deux ouvertures simultanément. Cela permet d'améliorer la stabilité de cette biellette notamment lors d'un mouvement de coulissement dans ces ouvertures.

On peut prévoir que la presse comprend au moins un plateau portant une coquille apte à former un flan du pneumatique, le bâti comprenant des rampes agencées pour faire coulisser les secteurs par rapport au plateau sous l'effet d'un coulissement vers le haut du plateau par rapport au bâti.

Par exemple, le secteur peut être apte à être en appui contre le plateau et contre la rampe du bâti et à parcourir cette rampe sous l'effet d'un coulissement vers le haut du plateau. Lorsque le secteur parcourt la rampe du bâti sous l'effet de la montée du plateau, le secteur est dans un premier temps plaqué par la tension exercée par la biellette dont une extrémité reste logée à une extrémité de l'ouverture du secteur, empêchant ainsi le basculement du secteur et entrainant son coulissement. Puis, lorsque le secteur a parcouru une plus grande partie de la rampe du bâti, la biellette et l'ouverture sont disposées de telle façon que la biellette est apte à parcourir cette ouverture, entrainant ainsi le basculement du secteur qui n'est alors plus en appui sur la rampe.

De préférence, il y a autant de rampes que de secteurs.

Ainsi, le mouvement de coulissement du secteur en appui sur la rampe du bâti peut être contrôlé, notamment par la forme et/ou l'inclinaison donnée à cette rampe. Par exemple, une pente faible permet d'augmenter l'amplitude du mouvement de coulissement du secteur avant que celui-ci ne bascule.

De préférence, chaque rampe du bâti est inclinée vers le haut lorsqu'on la parcourt en direction opposée à la presse.

Ainsi, le parcours de cette rampe par le secteur correspondant lui permet de s'éloigner du pneumatique.

De préférence encore, chaque rampe du bâti est incurvée et/ou concave.

C'est en effet la forme de la rampe qui détermine la vitesse du secteur et la variation de cette vitesse lors du recul. Une forme concave fournit une vitesse de recul relativement basse au début du mouvement du secteur pour faciliter la séparation de ce dernier avec les sculptures. Elle augmente ensuite la vitesse du secteur lorsque celui-ci est séparé de la bande de roulement. Cette augmentation peut être constante compte-tenu de la forme incurvée concave. En outre, la forme de la rampe permet également une variation de l'effort appliqué. Ainsi, plus on se rapproche de la verticale, plus l'effort est important. De cette manière, on peut par exemple fournir plus d'effort en début de démoulage.

On peut prévoir que les rampes du bâti étant des rampes supérieures, le bâti comprend en outre des rampes inférieures contre lesquelles les secteurs sont aptes à être en appui.

En effet, on peut envisager que le secteur parcourt une rampe, par exemple la rampe supérieure, lors d'une montée du plateau et parcourt l'autre rampe, inférieure donc, lors d'une descente du plateau, et inversement. Le secteur est apte à être en appui soit sur aucune rampe, soit sur au moins une de ces deux rampes ou soit encore sur ces deux rampes à la fois selon les différentes étapes de son mouvement.

De préférence, chaque rampe inférieure est rectiligne et inclinée sur une plus grande partie de sa longueur.

On peut également prévoir que chaque secteur est retenu prisonnier dans une ouverture du bâti délimitée au moins en partie par une ou plusieurs des rampes.

Ainsi, en cas de mouvements incontrôlés du secteur dans des circonstances imprévues, celui-ci ne peut pas s'échapper ni être projeté dans l'environnement de la presse.

Une fois que le secteur a basculé et est en appui sur la rampe inférieure du bâti, le retour à la position initiale se fait par la descente de la couronne de la presse qui est apte à parcourir un bord des secteurs afin de les faire coulisser en direction de l'ébauche de pneumatique.

Nous allons maintenant décrire un mode de réalisation de la presse selon l'invention en référence aux dessins annexés sur lesquels :
- les figures 1 à 10 sont des vues partielles en coupe axiale verticale d'une presse selon l'invention au cours d'étapes successives d'un cycle de cuisson d'une ébauche, sur lesquelles un seul des secteurs est illustré ;
- les figures 11, 12 et 13 sont des vues en perspective d'un secteur de la presse des figures 1 à 10.

Nous allons décrire en référence aux figures une presse selon un mode de réalisation de l'invention. Cette presse sert à la cuisson et à la mise en forme d'ébauches de pneumatique de roue. Il peut s'agir d'une roue de véhicule tel qu'un véhicule utilitaire, un véhicule de tourisme ou un véhicule de type poids-lourd. En l'espèce, il s'agit d'une presse pour des ébauches de pneumatique d'engins de génie civil tels que ceux utilisés dans les mines.

La presse 2 comprend un bâti 4 formant un socle d'un moule, supposé immobile et fixé sur le sol dans la suite. Elle présente une forme générale à symétrie de révolution autour de l'axe vertical 6.

La presse 2 comprend un plateau inférieur 8 portant une coquille 10 rigidement fixée au plateau 8, sur celui-ci. Le plateau 8 est monté mobile à coulissement vertical suivant l'axe 6 par rapport au bâti 4. La presse comprend à cette fin des moyens de guidage et de motorisation qui sont classiques et ne sont pas détaillés ici.

De même, la presse comprend un plateau supérieur horizontal (non représenté) auquel est rigidement fixée une coquille supérieure 12 sous le plateau, le plateau étant monté mobile à coulissement vertical suivant l'axe 6 par rapport au bâti 4, ici encore par des moyens de guidage et de motorisation qui ne sont pas détaillés. Afin de permettre l'ouverture du moule, le plateau supérieur coulisse indépendamment du plateau inférieur 10.

La presse comprend également des secteurs latéraux 16 qui s'étendent en périphérie de la presse. Bien qu'un seul secteur ait été illustré sur les figures, la presse en comprend plusieurs, par exemple entre dix et vingt. Ces secteurs sont uniformément répartis autour de l'axe vertical 6. Ils sont identiques entre eux. Le mécanisme que nous allons décrire et qui est associé à chaque secteur est identique pour tous les secteurs.

Les coquilles 10, 12 et les secteurs 16 forment tous ensemble un moule de cuisson pour l'ébauche. Les coquilles servent principalement à former les flancs latéraux respectifs 20 du pneumatique 18 tandis que les secteurs 16 forment sa bande de roulement 22 comprenant notamment des sculptures (non illustrées) parmi lesquelles se trouvent de fines rainures. Lors du moulage et de la cuisson, les coquilles et les secteurs forment une enceinte fermée pouvant être mise sous pression et chauffée pour réaliser la vulcanisation de la gomme de l'ébauche en vue de produire le pneumatique. Les moyens de chauffage et de mise sous pression sont classiques et ne seront pas décrits ici.

Pour chaque secteur, la coquille inférieure 10 présente une chape 26 formant un prolongement radial de la coquille en direction opposée à l'axe 6. Le plateau inférieur 8, la coquille inférieure 10 et les chapes 26 forment tous ensemble un solide rigide.

De même, pour chaque secteur, le bâti 4 comprend une cale 28 rigidement fixée à une base du bâti et s'étendant en saillie d'une face supérieure de cette dernière, près de son bord périphérique. Le bâti et ses cales 28 forment eux aussi tous ensemble un solide rigide.

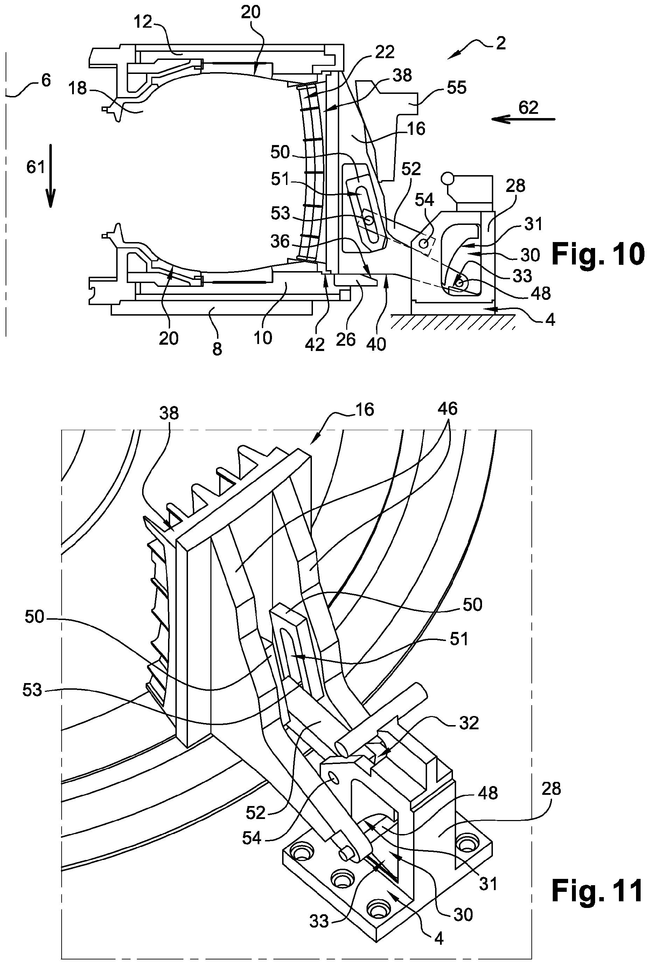

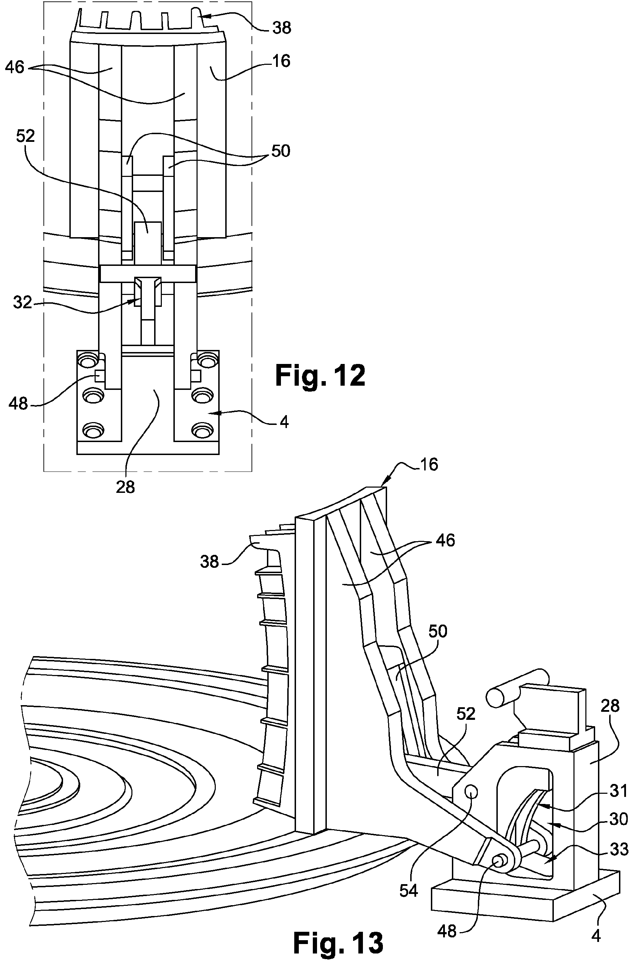

Comme on le voit en particulier sur les figures 11, 12 et 13, la cale 28 présente une forme générale plate et orientée de sorte que son épaisseur est mesurée dans un plan perpendiculaire à un plan radial à l'axe 6. Elle présente une large ouverture traversante 30 présentant un contour fermé. La cale 28 présente au niveau de son ouverture 30 une rampe supérieure 31 et une rampe inférieure 33. La rampe supérieure 31 forme les bords avant et supérieur de l'ouverture. Elle présente deux tronçons, un tronçon incliné incurvé concave et un tronçon rectiligne horizontal. Le tronçon incliné prolonge le tronçon horizontal vers le bas en direction de l'intérieur de la presse. La rampe inférieure 33 forme elle le bord inférieur de l'ouverture. Elle est rectiligne sur une plus grande partie de sa longueur et inclinée vers le bas en direction de l'extérieur de la presse. Son extrémité à proximité du bord arrière de l'ouverture de la cale est légèrement incurvée. Le bord arrière de l'ouverture est lui vertical.

La cale 28 présente en outre une fente radiale 32 s'étendant suivant son plan médian dans une partie de la cale, à partir d'un côté de la cale dirigé vers l'axe 6 et jusque dans l'ouverture 30, dédoublant ainsi cette dernière.

La chape 26 présente un bord supérieur rectiligne horizontal 34 sur lequel le secteur 16 est apte à être en appui. Elle présente en outre un bord périphérique rectiligne 36 incliné en direction opposée à l'axe 6 et vers le bas, et prolongeant le bord supérieur 34 d'un côté opposé à l'axe 6, le secteur 16 étant également apte à être en appui sur ce bord.

Chaque secteur 16 présente une partie moulante 38 s'étendant suivant la direction verticale et orientée en direction de l'axe 6. Le secteur présente également une face inférieure plane 40 apte à reposer sur une face supérieure 42 de la coquille inférieure 10 et sur le bord supérieur rectiligne horizontal 34 de la chape 26.

En partie arrière, du côté opposé à l'axe 6, le secteur comprend deux platines verticales 46 fixées à la partie formant moule par leur bord dirigé vers l'axe, parallèles l'une à l'autre et distantes l'une de l'autre, les platines étant symétriques l'une de l'autre par rapport à un plan radial à l'axe 6. Les deux platines 46 recouvrent partiellement les faces principales respectives de la cale 28 et sont reliées l'une à l'autre à travers l'ouverture 30 au moyen d'un suiveur 48. Ce suiveur a une forme générale cylindrique circulaire et articulé aux platines dans lesquelles il est logé. Le secteur est retenu prisonnier dans l'ouverture 30. Le suiveur 48 est apte à venir en contact direct avec chacun des bords de l'ouverture 30 de la cale 28, notamment les rampes 31 et 33.

Les deux platines 46 présentent sur leur face interne, c'est-à-dire leur face en regard l'une de l'autre, un renfort 50 présentant une ouverture 51. Ces deux renforts présentent une symétrie par rapport à un plan radial à l'axe 6 et présentent une dimension principale faiblement inclinée par rapport à ce même axe. Ils ont une forme générale parallélépipédique. Les ouvertures 51 présentent elles une forme générale rectiligne allongée dont la dimension principale est également faiblement inclinée par rapport à l'axe 6.

Une biellette 52 est en liaison avec le secteur 16 et la cale 28 et présente une forme générale allongée rectiligne et parallélépipédique. La biellette forme un solide rigide. Une des extrémités de la biellette est montée mobile à coulissement et à rotation dans les ouvertures 51 du secteur. Plus précisément, la biellette comprend un suiveur 53, constitué par un cylindre circulaire, qui est apte à parcourir les ouvertures 51 des deux platines simultanément. Ce suiveur 53 est monté libre en rotation par rapport au corps de la biellette. C'est donc ce suiveur qui permet le montage à coulissement et à rotation de la biellette et du secteur. L'autre extrémité 54 de la biellette 52 est articulée, donc libre en rotation uniquement, avec la cale 28.

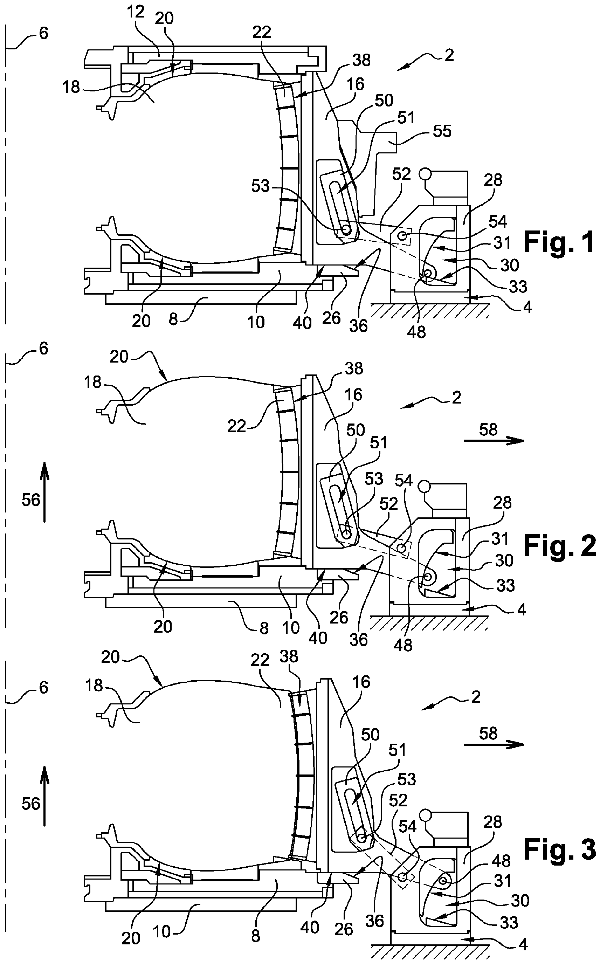

Nous allons maintenant présenter l'utilisation de la presse qui vient d'être décrite au cours d'un cycle de cuisson à l'appui des figures 1 à 10.

Sur la figure 1, la presse et le moule sont fermés, la coquille inférieure 10 et la coquille supérieure 12 occupant leurs positions les plus basses et les secteurs 16 occupant leurs positions les plus proche de l'axe 6. Il s'agit de la position servant à la cuisson d'une ébauche de pneumatique 18. Le secteur est notamment en appui par sa face inférieure 40 contre la face supérieure 34 de la chape 26 et la face supérieure 42 de la coquille 10 d'une part et en appui par son suiveur 48 contre la rampe inférieure 33 de la cale 28 d'autre part. Le suiveur 53 de la biellette 52 est logé dans les ouvertures 51 du secteur au niveau des extrémités des ouvertures les plus proches de la coquille inférieure 10. La biellette 52 est dans une disposition sensiblement horizontale, légèrement inclinée vers le haut en direction de l'axe 6. Une couronne périphérique 55 assure par effet de coin, en appui sur les bords circonférentiels des platines 46 des secteurs, le serrage radial de ces derniers en direction de l'axe 6.

Préalablement à l'étape illustrée à la figure 2, la presse a été ouverte par coulissement de la coquille supérieure 12 et de la couronne 55 vers le haut.

A l'étape illustrée à la figure 2, on commande le coulissement vers le haut du plateau inférieur 8, de la coquille inférieure 10 et de la chape 26 par rapport au bâti suivant la flèche 56. Ce coulissement est aussi celui du secteur 16 sans que celui-ci ne bascule. Le secteur coulisse alors suivant la flèche 58. Lors du début du coulissement du secteur, celui-ci quitte la rampe 33 sur laquelle il était en appui via son suiveur 48 et vient en appui sur la rampe 31. Le suiveur 53 de la biellette reste logé au niveau des extrémités des ouvertures les plus proches de la coquille inférieure. Ainsi s'amorce donc le coulissement radial des secteurs qui s'éloignent du pneumatique 18 pour le démoulage de la bande de roulement.

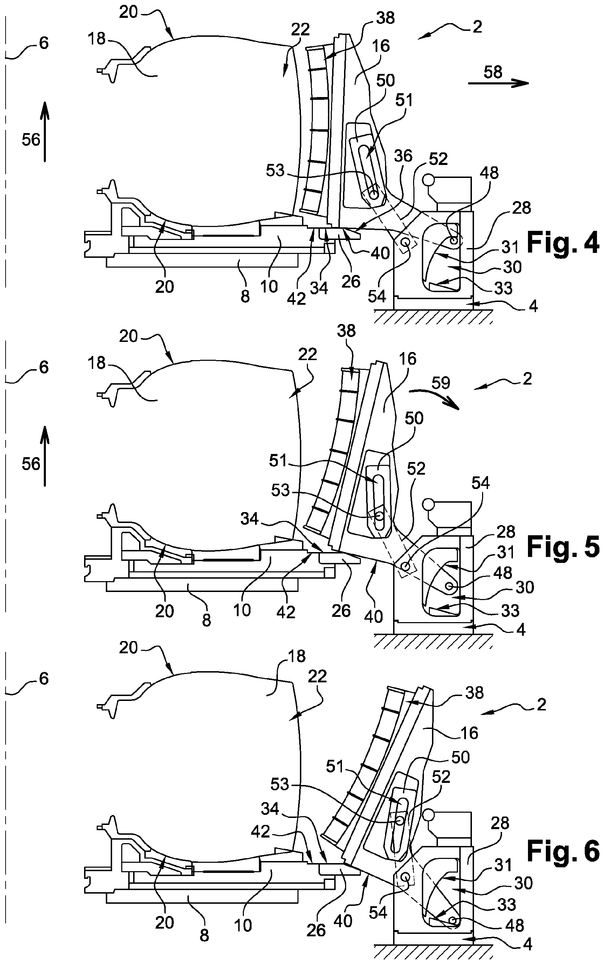

En référence aux figures 3 et 4, les mêmes mouvements se poursuivent de sorte que la coquille inférieure 10 est de plus en plus haute et les secteurs 16 de plus en plus éloignés de l'axe 6 en direction radiale. Au cours de ce mouvement, le suiveur 48 continue à parcourir la rampe 31 dans la direction 58 et le suiveur 53 de la biellette 52 reste logé au niveau des extrémités des ouvertures 51 les plus proches de la coquille inférieure 10. L'inclinaison de la biellette augmente au fur et mesure du parcours de la rampe 31. Sur la figure 4, le suiveur 48 du secteur arrive au niveau d'une extrémité supérieure de la rampe 31. Le secteur 16 est alors dégagé des sculptures de la bande de roulement 22 mais pas encore suffisamment pour permettre le retrait du pneumatique cuit. La biellette est dans une position sensiblement verticale. Sur la figure 4, le secteur a fini de coulisser en direction radiale et commence à basculer vers l'extérieur en rotation par appui sur la chape, sous l'effet de la traction exercée par la biellette.

En référence à la figure 5, la coquille 10 continue à coulisser suivant la direction 56 et le secteur 16, qui a fini de parcourir la rampe 31, continue de basculer sous l'effet de la traction de la biellette et de la gravité suivant la direction 59. Ce basculement est permis à la fois par la portion incliné 36 de la chape 26 contre laquelle la face inférieure 40 du secteur est alors en appui et par le parcours de l'ouverture 51 par le suiveur 53 de la biellette 52 dans le sens de la flèche 56.

En référence à la figure 6, le secteur a fini de basculer et est en appui à la fois contre la rampe inférieure 33 de la cale par son suiveur 48 et contre la face incliné 36 de la chape 26 par sa face inférieure 40. La biellette 52 est alors en position sensiblement verticale et son suiveur 53 se trouve dans une portion médiane dans les ouvertures 51. Ce basculement ayant totalement dégagé le pneumatique 18 cuit, celui-ci est extrait de la presse et une nouvelle ébauche de pneumatique crue destinée à être cuite est introduite dans la presse.

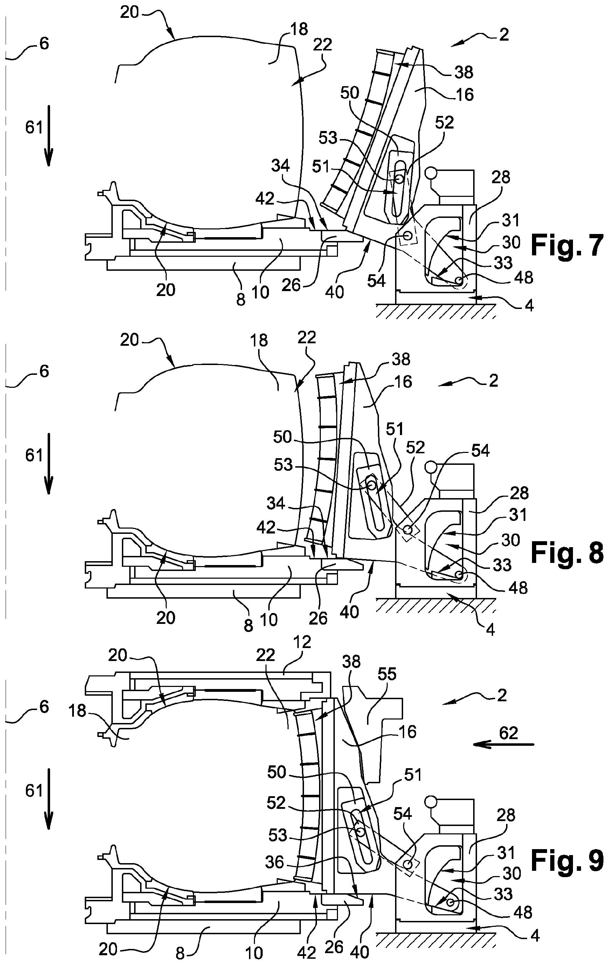

En référence aux figures 7 et 8, on débute alors les opérations de fermeture de la presse. Pour cela, on fait coulisser le plateau 8, la coquille inférieure 10 et la chape 26 vers le bas par rapport au bâti 4 suivant la flèche 61. Le secteur 16 suit cette descente en basculant par gravité, puisqu'il est en appui contre la chape 26, sans coulisser. Cela est rendu possible par le parcours du suiveur 53 de la biellette 52 dans les ouvertures 51 des secteurs en direction des extrémités de ces ouvertures supérieures qui sont les plus éloignées de la coquille inférieure. Sur la figure 8, le mouvement de coulissement vertical de la coquille inférieure vers le bas est terminé. Le secteur est en appui sur la rampe 33 par son suiveur 48 et sur la face horizontale 34 de la chape 26 par sa face inférieure 40. Le secteur n'est alors toujours pas au contact de la bande de roulement de l'ébauche de pneumatique crue. La coquille inférieure est alors dans sa position la plus basse.

En référence aux figures 9 et 10, on commande ensuite la descente de la coquille supérieure 12 et de la couronne 55. Cette dernière vient en appui contre la face externe des platines des secteurs de sorte qu'elle fait coulisser les secteurs en direction de l'axe 6 et contre l'ébauche, suivant la direction de la flèche 62. Pendant une plus grande partie de ce mouvement, le suiveur 48 n'est pas en appui contre la rampe 33. Au cours de ce mouvement, le suiveur 53 de la biellette 52 parcourt les ouvertures 51 des secteurs dans le sens de la flèche 61. A la fin de ce mouvement, la presse est à nouveau fermée et se retrouve dans la configuration de la figure 1.

Tous les mouvements des secteurs se produisent de cette façon et simultanément. On observe que la rampe 31 et la biellette 52 sont agencées de sorte que le secteur puisse se déplacer radialement sur une grande distance avant de permettre le basculement de ce secteur par gravité sous l'effet du coulissement vers le haut de la coquille inférieure.

Ce moule est particulièrement bien adapté pour le démoulage de pneumatique de génie civil, en particulier ceux qui comprennent de nombreuses rainures fines. Il procure en effet une longue course radiale du secteur lors du démoulage avec un basculement retardé au maximum. Cet agencement diminue les efforts de démoulage liés à l'obstruction de la gomme sur le moule. Il limite les efforts de fonctionnement et les problématiques d'usure.

Dans ce mode de réalisation, les cales 28 sont vissées sur le bâti et donc remplaçables par des cales dans lesquelles la rampe supérieure 31 présente une autre configuration. Cela modifie la trajectoire du secteur et/ou sa vitesse. On peut donc adapter la presse à différents modèles de pneumatique.

Bien entendu, on pourra apporter à l'invention de nombreuses modifications sans sortir du cadre de celle-ci.

Une seule biellette par secteur a été utilisée ici. On peut prévoir de dédoubler la biellette de sorte que chaque secteur soit articulé avec deux biellettes, chacune étant montée mobile à coulissement et à rotation respectivement dans une des deux ouvertures du secteur.

Les rampes 31 et 33 du mode de réalisation présenté ont été présentées comme des rampes séparées. On peut prévoir qu'il ne s'agisse en réalité que de deux portions d'une même rampe. De manière générale on pourra modifier la forme et l'agencement des rampes. Même si le coulissement initial du secteur lors de l'ouverture du moule est avantageux, on peut prévoir que ce mouvement est en fait un léger basculement.

## Revendications

1. Presse (2) de cuisson d'une ébauche de pneumatique (18), la presse comportant :
- un bâti (4),
- plusieurs secteurs (16) répartis circonférentiellement aptes à former une bande de roulement (22) du pneumatique, ces secteurs présentant chacun au moins une ouverture (51), et
- pour chaque secteur, au moins une biellette (52) montée mobile à coulissement et à rotation dans l'ouverture du secteur d'une part et articulée au bâti d'autre part, **caractérisée en ce que** ce montage et cette articulation forment les seules liaisons de la biellette avec d'autres éléments de la presse que la biellette.

2. Presse (2) selon la revendication précédente, agencée de sorte que chaque biellette reste logée à une extrémité de l'ouverture du secteur correspondant pendant une plus grande partie d'un coulissement du secteur.

3. Presse (2) selon l'une quelconque des revendications précédentes, agencée de sorte que chaque biellette (52) coulisse dans l'ouverture (51) du secteur correspondant lors d'un basculement du secteur (16).

4. Presse (2) selon l'une quelconque des revendications précédentes, dans laquelle chaque secteur (16) présente deux ouvertures (51) en regard l'une de l'autre, la ou chaque biellette (52) correspondante étant de préférence montée dans ces deux ouvertures.

5. Presse (2) selon l'une quelconque des revendications précédentes, comprenant au moins un plateau (8) portant une coquille (10) apte à former un flan (20) du pneumatique, le bâti (4) comprenant des rampes (31) agencées pour faire coulisser les secteurs par rapport au plateau (8) sous l'effet d'un coulissement vers le haut du plateau par rapport au bâti.

6. Presse (2) selon la revendication précédente, dans laquelle chaque rampe (31) du bâti est inclinée vers le haut lorsqu'on la parcourt en direction opposée à la presse.

7. Presse (2) selon l'une quelconque des revendications 5 ou 6, dans laquelle chaque rampe du bâti (31) est incurvée.

8. Presse (2) selon l'une quelconque des revendications 5 à 7, dans laquelle chaque rampe du bâti (31) est concave.

9. Presse (2) selon l'une quelconque des revendications 5 à 8, dans laquelle les rampes du bâti (31) étant des rampes supérieures, le bâti comprend en outre des rampes inférieures (33) contre lesquelles les secteurs (16) sont aptes à être en appui.

10. Presse (2) selon la revendication précédente, dans laquelle chaque rampe inférieure (33) est rectiligne et inclinée sur une plus grande partie de sa longueur.

11. Presse (2) selon l'une quelconque des revendications 5 à 10, dans laquelle chaque secteur (16) est retenu prisonnier dans une ouverture (30) du bâti (4) délimitée au moins en partie par une ou plusieurs des rampes (31, 33).

## Patentansprüche

1. Vulkanisierungspresse (2) für einen Reifenrohling (18), wobei die Presse umfasst:
- einen Rahmen (4),
- mehrere entlang des Umfangs verteilte Sektoren (16), die geeignet sind, einen Laufstreifen (22) des Reifens zu formen, wobei diese Sektoren jeweils mindestens eine Öffnung (51) aufweisen, und
- für jeden Sektor mindestens eine Zugstange (52), die zum einen gleit- und drehbeweglich in der Öffnung des Sektors gelagert ist und zum anderen an den Rahmen angelenkt ist, **dadurch gekennzeichnet, dass** diese Lagerung und diese Anlenkung die einzigen Verbindungen der Zugstange mit den anderen Elementen der Presse außer der Zugstange sind.

2. Presse (2) nach dem vorhergehenden Anspruch, die so eingerichtet ist, dass jede Zugstange während eines größeren Teils eines Gleitens des Sektors an einem Ende der Öffnung des entsprechenden Sektors aufgenommen bleibt.

3. Presse (2) nach einem der vorhergehenden Ansprüche, die so eingerichtet ist, dass jede Zugstange (52) bei einem Kippen des Sektors (16) in der Öffnung (51) des entsprechenden Sektors gleitet.

4. Presse (2) nach einem der vorhergehenden Ansprüche, bei der jeder Sektor (16) zwei einander gegenüberliegende Öffnungen (51) aufweist, wobei die oder jede entsprechende Zugstange (52) bevorzugt in diesen beiden Öffnungen gelagert ist.

5. Presse (2) nach einem der vorhergehenden Ansprüche, umfassend mindestens eine Grundplatte (8), die eine Schale (10) trägt, die geeignet ist, eine Flanke (20) des Reifens zu formen, wobei der Rahmen (4) Rampen (31) umfasst, die dazu eingerichtet sind, die Sektoren in Bezug auf die Grundplatte (8) gleiten zu lassen unter der Wirkung eines Aufwärtsgleitens der Grundplatte in Bezug auf den Rahmen.

6. Presse (2) nach dem vorhergehenden Anspruch, bei der jede Rampe (31) des Rahmens nach oben geneigt ist, wenn man an ihr in die zur Presse entgegengesetzte Richtung entlangfährt.

7. Presse (2) nach einem der Ansprüche 5 oder 6, bei der jede Rampe des Rahmens (31) gekrümmt ist.

8. Presse (2) nach einem der Ansprüche 5 bis 7, bei der jede Rampe des Rahmens (31) konkav ist.

9. Presse (2) nach einem der Ansprüche 5 bis 8, bei der, wenn die Rampen des Rahmens (31) obere Rampen sind, der Rahmen ferner untere Rampen (33) umfasst, an denen sich die Sektoren (16) abstützen können.

10. Presse (2) nach dem vorhergehenden Anspruch, bei der jede untere Rampe (33) geradlinig ist und über einen größeren Teil ihrer Länge gekrümmt ist.

11. Presse (2) nach einem der Ansprüche 5 bis 10, bei der jeder Sektor (16) in einer Öffnung (30) des Rahmens (4), die zumindest teilweise durch eine oder mehrere der Rampen (31, 33) begrenzt wird, festgehalten wird.

## Claims

1. Curing press (2) for a tyre blank (18), the press being **characterized in that** it comprises:
- a frame (4),
- a plurality of circumferentially distributed segments (16) capable of forming a tread (22) of the tyre, each of these segments having at least one opening (51), and
- for each segment, at least one tie rod (52) mounted slidably and rotatably in the opening of the segment on the one hand, and hinged to the frame on the other hand, this mounting and hinging forming the only connections of the tie rod to elements of the press other than the tie rod.

2. Press (2) according to the preceding claim, arranged so that each tie rod remains housed at one end of the opening of the corresponding segment during a greater part of the sliding movement of the segment.

3. Press (2) according to any of the preceding claims, arranged so that each tie rod (52) slides in the opening (51) of the corresponding segment during a sliding movement of the segment (16).

4. Press (2) according to any of the preceding claims, wherein each segment (16) has two openings (51) facing one another, the corresponding tie rod (52), or each tie rod, preferably being mounted in these two openings.

5. Press (2) according to any of the preceding claims, comprising at least one plate (8) carrying a shell (10) capable of forming a tyre blank (20), the frame (4) comprising ramps (31) arranged to make the segments slide relative to the plate (8) as a result of an upward sliding movement of the plate relative to the frame.

6. Press (2) according to the preceding claim, wherein each ramp (31) of the frame is inclined upwards when travelled over in the opposite direction from the press.

7. Press (2) according to either of Claims 5 and 6, wherein each ramp of the frame (31) is curved.

8. Press (2) according to any of Claims 5 to 7, wherein each ramp of the frame (31) is concave.

9. Press (2) according to any of Claims 5 to 8, wherein the ramps of the frame (31) being upper ramps, the frame further comprises lower ramps (33) against which the segments (16) can bear.

10. Press (2) according to the preceding claim, wherein each lower ramp (33) is rectilinear and inclined over a greater part of its length.

11. Press (2) according to any of Claims 5 to 10, wherein each segment (16) is trapped in an opening (30) of the frame (4) delimited, at least partially, by one or more of the ramps (31, 33).
